# EUROPEAN PATENT APPLICATION

(11) **EP 4 557 836 A2**
(43) Date of publication of application: **21.05.2025**
(21) Application number: 25168035.1
(22) Date of filing: 16.06.2022
(51) Int. Cl.: H04W 48/18

(54) **MANAGEMENT LINK FOR MULTI-LINK OPERATION**

(30) Priority: 18.06.2021 GB 202108744
(62) Divisional of application: 22737570.6
(71) Applicant: CANON KABUSHIKI KAISHA, Tokyo 146-8501 (JP)
(72) Inventor: SEVIN, Julien, 35517 Cesson-Sévigné Cedex (FR); LORGEOUX, Mickaël, 35517 Cesson-Sévigné Cedex (FR); GUIGNARD, Romain, 35517 Cesson-Sévigné Cedex (FR); BARON, Stéphane, 35517 Cesson-Sévigné Cedex (FR)
(74) Representative: Casalonga France

(57) **Abstract**

ML beacon frames sent by AP MLD during ML Discovery report the profiles of all the affiliated APs. This duplication over multiple channels substantially reduces network bandwidth available for data transmission. A management AP amongst the affiliated APs is selected for processing the management and control frames. The ML beacon frames from the management AP convey the profiles of all the affiliated APs, while the other affiliated APs send lighter ML beacon frames that for instance indicate where to find the full ML beacon frames. The ML beacon frames hence signal, using a Link ID, which one of the affiliated APs is the management AP. Upon receiving a light ML beacon frame, the non-AP MLD can configure one of its affiliated non-AP station to communicate with the management AP, and then can switch the association procedure over this management link.

## Description

### FIELD OF THE INVENTION

The present invention generally relates to wireless communications and more specifically to Multi-Link (ML) communication.

### BACKGROUND OF THE INVENTION

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

The 802.11 family of standards adopted by the Institute of Electrical and Electronics Engineers (IEEE - RTM) provides a great number of mechanisms for wireless communications between stations.

With the development of latency sensitive applications such as online gaming, real-time video streaming, virtual reality, drone or robot remote controlling, better throughput, low latency and robustness requirements and issues need to be taken into consideration. Such problematic issues are currently under consideration by the IEEE 802.11 working group as a main objective to issue the next major 802.11 release, known as 802.11be or EHT for "Extremely High Throughput".

The IEEE P802.11be/D1.0 version (May 2021) defines the Multi-link (ML) operation (MLO). MLO improves data throughput by allowing communications between stations over multiple concurrent and non-contiguous communication links.

Multi-link operation (MLO) enables a non-AP (access point) MLD (ML device) to register with an AP MLD, i.e. to discover, authenticate, associate and set up multiple links with the AP MLD. Each link enables channel access and frame exchanges between the non-AP MLD and the AP MLD based on supported capabilities exchanged during association.

A MLD is a logical entity that has more than one affiliated non-AP station (STA) and has a single medium access control (MAC) service access point (SAP) to logical link control (LLC), which includes one MAC data service. An AP MLD is thus made of multiple affiliated APs whereas a non-AP MLD is made of multiple affiliated non-AP stations. The affiliated non-AP stations in both AP MLD and non-AP-MLD can use 802.11 mechanisms to communicate with affiliated non-AP stations of another MLD over each of the multiple communication links that are set up.

During ML discovery, a non-AP MLD discovers the various wireless links made available by the AP MLD, i.e. offered by the affiliated APs. To do so, the various affiliated APs of the AP MLD send management frames, for instance broadcast beacon frames that are augmented, compared to 802.1 1ax management frames, with a multi-link element specific to the MLO.

The multi-link element defines the profiles (e.g. the capabilities and operational parameters) of all the other APs affiliated to the AP MLD (known as reported affiliated APs) in addition to the profile of the affiliated AP sending the frame (known as reporting affiliated AP) contained directly in the frame.

This additional information advantageously simplifies the association procedure since information needed to perform multiple associations between affiliated APs and affiliated non-AP stations of a non-AP MLD are gathered in only one step.

However, this approach has drawbacks. In particular, it has substantial signally costs that are duplicated over the various links, namely the profiles of the reported affiliated APs are duplicated in the periodic beacon frames over the various links. Hence, the bandwidth available for data transmission is reduced. This even more degrades the bandwidth so because such information is only used for sporadic and specific MLOs such as ML association or ML update procedures.

### SUMMARY OF INVENTION

In this context, the inventors have searched for satisfactory enhancements.

In particular, the invention proposes a communication method in a wireless network, comprising at an access point, AP, multi-link device, MLD, having multiple affiliated APs:
sending, by a reporting affiliated AP, a management frame,
wherein the management frame signals that one of the affiliated APs is a management AP providing profiles of all the affiliated APs. The signaling may indicate which Link ID (uniquely defining an affiliated AP) to contact for a non-AP MLD to receive all the profiles.

As mentioned below, plural management APs can be provided at the AP MLD, for example one per RF band.

Correspondingly, from non-AP MLD perspective, the invention proposes a communication method in a wireless network, comprising at a non-access point, non-AP, multi-link device, MLD:
receiving, from a reporting affiliated AP of an AP MLD having multiple affiliated APs, a management frame signaling that one of the affiliated APs is a management AP providing profiles of all the affiliated APs, and
obtaining, from the management AP, the profiles of the affiliated APs.

Thanks to the signaling in the management frame, the AP MLD is able to indicate and thus redirect, if necessary, the non-AP MLDs to the management AP in order to obtain the profiles, i.e. network information, of the affiliated APs. In that way, a single management link (with the management AP) can convey the profiles. This advantageously allows the management frames sent by the other (non-management) affiliated APs to be drastically simplified, hence saving bandwidth.

Also, the present invention proposes a management frame in a wireless network comprising an access point, AP, multi-link device, MLD, having multiple affiliated APs, the management frame including a field signaling that one of the affiliated APs is a management AP providing profiles of all the affiliated APs.

Optional features of these embodiments of the invention are defined in the appended claims. Some of these features are explained here below with reference to a method, while they can be transposed into device features.

In some embodiments, providing profiles by the management AP includes advertising the profiles of all the affiliated APs in management frames, e.g. beacon frames.

The management frame may be a beacon frame. In a variant, it may also be a probe response frame. These frames are described in 802.11be D1.0.

In other embodiments, the reporting affiliated AP is the management AP, and the management frame (preferably a beacon frame but not necessarily) further advertises the profiles of all the affiliated APs. It means the management frame both provides the signaling of the management AP and the profiles of the affiliated APs.

For example, the profiles of the affiliated APs other than the reporting one are conveyed in a Basic variant Multi-Link element (802.11be D1.0) of the management frame. They may be Per-STA Profile subelements as defined below.

In some embodiments, only one of the affiliated APs of the AP MLD is a management AP. Hence, the AP MLD concentrates most of the management handling at a single affiliated AP.

In other embodiments, one affiliate AP of the affiliated APs per frequency band is a management AP. Hence, one management AP is provided per RF band.

In some embodiments, the reporting affiliated AP is a non-management AP, and the management frame provides only a profile of the reporting affiliated AP and a management AP profile of one or more management APs. In other words, a non-management AP does not advertise the profile of the other non-management affiliated APs, but only of management affiliated AP or APs (in addition to its own profile).

Each non-management affiliated AP may operate in this way (i.e. by sending beacon frames with only the profile of the management AP), while the management AP sends beacon/management frames with all the profiles.

In some embodiments, the method further comprises, at the non-AP MLD, determining from the management frame whether the reporting affiliated AP is the management AP.

In embodiments, responsive to determining that the reporting affiliated AP is not the management AP, the non-AP MLD configures an affiliated non-AP station of the non-AP MLD to communicate with the management AP. This sets up a management link (of the MLO) dedicated for management exchanges, for example to obtain the profiles of all the affiliated APs.

In embodiments, responsive to determining that the reporting affiliated AP is not the management AP, switching from one reporting affiliated non-AP station to another affiliated non-AP station to exchange management frames with the management AP. For example, the management frames are exchanged to perform association between the non-AP MLD and the AP MLD. Therefore, the signaling of the invention allows the non-AP MLD to find the appropriate management AP of the AP MLD to perform an association of its affiliated non-AP stations with corresponding affiliated APs.

In some embodiments, the management AP profile is conveyed in a Per-STA field included in a Link Info field of a Basic variant Multi-Link element of the management frame. Hence in case only one management AP is declared, only one Per-STA field is provided. Similar fields to those describing the network information (of a BSS) in conventional management frames can be used as profile.

In variants, the management AP profile is conveyed in a subelement included in a Link Info field of a Basic variant Multi-Link element of the management frame and having a Subelement ID subfield set to a value different from 0 and 221. It means that a new subelement type is defined (compared to 802.11be D1.0) in the Link Info field, that may be finely defined to the needs of the present invention, for example to include the minimum information required to connect to the management AP.

For example, the management AP profile of a management AP includes a first subfield defining an operating class (i.e. frequency band, e.g. from amongst 2.4 GHz, 5 GHz, 6 GHz) of the management AP and a second subfield defining an operating channel (within the frequency band) of the affiliated AP. The profile may be limited to these two subfields to reduce the total signaling length. It may also include the BSSID of the management AP.

In an embodiment, the management AP profile further includes a Management AP TBTT Offset subfield indicating a scheduled time when the management AP will send a next beacon frame providing the profiles of all the affiliated APs.

In some embodiments, the method further comprises, at the non-AP MLD, deciding, based on the Management AP TBTT Offset subfield, between waiting for the next beacon frame from the management AP or sending a probe request frame to the management AP, to obtain the profiles of the affiliated APs from the management AP.

Hence, obtaining the profiles of the affiliated APs may merely include receiving the next beacon frame sent by the management AP.

Or, obtaining the profiles of the affiliated APs may merely include sending a probe request frame to the management AP and in response receiving, from the latter, a probe response frame providing the profiles of the affiliated APs.

In some embodiments, the signaling includes a first field defining whether the AP MLD implements a management AP or not.

In some embodiments, the signaling includes a second field storing a Link ID uniquely identifying the management AP and includes a separate field storing a Link ID uniquely identifying the reporting affiliated AP. Hence, the determining step of whether the reporting affiliated AP is the management AP may merely comprise comparing the Link ID of the second field with the Link ID of the separate field.

In some embodiments, the AP MLD performs multi-link operations, MLO, with non-AP MLDs, the method further comprising, at the AP MLD, exchanging management frames and/or control frames that include at least one parameter affecting a link of the multi-link operation, with a non-AP MLD over only a management link established with the management AP.

Correspondingly, the non-AP MLD performs multi-link operations, MLO, with the AP MLD, the method further comprising, at the non-AP MLD, exchanging management frames and/or control frames that include at least one parameter affecting a link of the multi-link operation, with the AP MLD over only a management link established with the affiliated AP.

Correlatively, the invention also provides a wireless communication device comprising at least one microprocessor configured for carrying out the steps of any of the above methods. The wireless communication device is thus either a non-AP MLD or an AP MLD.

Another aspect of the invention relates to a non-transitory computer-readable medium storing a program which, when executed by a microprocessor or computer system in a wireless device, causes the wireless device to perform any method as defined above.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** illustrates a typical 802.11 network environment involving ML transmissions;
**Figure 2** schematically illustrates an exemplary sequence of management frames for operating the ML discovery and ML setup procedure as specified in IEEE P802.11be/D1.0.
**Figure 3** illustrates a Basic variant Multi-Link Element included in management frames as specified in IEEE P802.11be/D1.0;
**Figure 4** illustrates the format of the Per-STA Profile subelement of the Link Info field included in a Basic variant Multi-Link element, as specified in IEEE P802.11be/D1.0;
**Figure 5** illustrates an enhanced Basic variant Multi-Link Element, according to embodiments of the invention;
**Figure 6** illustrates a Management Profile subelement according to embodiments of the invention;
**Figure 7** illustrates an alternative Management Profile subelement according to embodiments of the invention;
**Figure 8** illustrates, using a flowchart, general steps at a reporting AP affiliated with an AP MLD for processing a management frame to be sent during the ML discovery and ML setup procedure, according to embodiments of the invention;
**Figure 9** illustrates, using a flowchart, general steps at a reporting non-AP station affiliated with a non-AP MLD for processing management frames received during the ML discovery and ML setup procedure, according to embodiments of the invention;
**Figures 10a****,** **10b****,** **10c** and **10d** schematically illustrates exemplary sequences of management frames for operating the ML discovery and ML setup procedures, according to embodiments of the invention; and
**Figure 11** shows a schematic representation of a wireless communication device in accordance with embodiments of the present invention.

### DETAILED DESCRIPTION OF EMBODIMENTS

The techniques described herein may be used for various broadband wireless communication systems, including communication systems that are based on an orthogonal multiplexing scheme. Examples of such communication systems include Spatial Division Multiple Access (SDMA) system, Time Division Multiple Access (TDMA) system, Orthogonal Frequency Division Multiple Access (OFDMA) system, and Single-Carrier Frequency Division Multiple Access (SC-FDMA) system. A SDMA system may utilize sufficiently different directions to simultaneously transmit data belonging to multiple user terminals, i.e. wireless devices or stations. A TDMA system may allow multiple user terminals to share the same frequency channel by dividing the transmission signal into different time slots or resource units, each time slot being assigned to different user terminal. An OFDMA system utilizes orthogonal frequency division multiplexing (OFDM), which is a modulation technique that partitions the overall system bandwidth into multiple orthogonal sub-carriers or resource units. These sub-carriers may also be called tones, bins, etc. With OFDM, each sub-carrier may be independently modulated with data. A SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers.

The teachings herein may be incorporated into (e.g., implemented within or performed by) a variety of apparatuses (e.g., stations). In some aspects, a wireless device or station implemented in accordance with the teachings herein may comprise an access point (so-called AP) or not (so-called non-AP station or STA).

While the examples are described in the context of WiFi (RTM) networks, the invention may be used in any type of wireless networks like, for example, mobile phone cellular networks that implement very similar mechanisms.

An AP may comprise, be implemented as, or known as a Node B, Radio Network Controller ("RNC"), evolved Node B (eNB), 5G Next generation base station (gNB), Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

A non-AP station may comprise, be implemented as, or known as a subscriber station, a subscriber unit, a mobile station (MS), a remote station, a remote terminal, a user terminal (UT), a user agent, a user device, user equipment (UE), a user station, or some other terminology. In some implementations, a STA may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smart phone), a computer (e.g., a laptop), a tablet, a portable communication device, a portable computing device (e.g., a personal data assistant), an entertainment device (e.g., a music or video device, or a satellite radio), a global positioning system (GPS) device, or any other suitable device that is configured to communicate via a wireless or wired medium. In some aspects, the non-AP station may be a wireless node. Such wireless node may provide, for example, connectivity for or to a network (e.g., a wide area network such as the Internet or a cellular network) via a wired or wireless communication link.

An AP manages a set of stations that together organize their accesses to the wireless medium for communication purposes. The stations (including the AP) form a service set, here below referred to as basic service set, BSS (although other terminology can be used). A same physical station acting as an access point may manage two or more BSS (and thus corresponding WLANs): each BSS is thus uniquely identified by a specific basic service set identification, BSSID and managed by a separate virtual AP implemented in the physical AP.

The 802.11 family of standards define various media access control (MAC) mechanisms to drive access to the wireless medium.

The current discussions in the task group 802.11be, as illustrated by draft IEEE P802.11be/D1.0 of May 2021 (below the D1.0 standard), introduce the Multi-Link Operation (MLO) when it comes to MAC layer operation. The MLO allows multi-link devices to establish or setup multiple links and operate them simultaneously.

A Multi-Link Device (MLD) is a logical entity and has more than one affiliated non-AP station (STA) and has a single medium access control (MAC) service access point (SAP) to logical link control (LLC), which includes one MAC data service. An Access Point Multi-Link Device (or AP MLD) then corresponds to a MLD where each station (STA) affiliated to the MLD is an AP, hence referred to as "affiliated AP". A non-Access Point Multi-Link Device (or non-AP MLD) corresponds to a MLD where each station (STA) affiliated to the MLD is a non-AP STA, referred to as "affiliated non-AP station". Depending on the literature, "multilink device", "ML Device" (MLD), "multilink logical entity", "ML logical entity" (MLE), "multilink set" and "ML set" are synonyms to designate the same type of ML Device.

Multiple affiliated non-AP stations of a non-AP MLD can then setup communication links with multiple affiliated APs of an AP MLD, hence forming a multi-link channel.

The links established for MLDs are theoretically independent, meaning that the channel access procedure (to the communication medium) and the communication are performed independently on each link. Hence, different links may have different data rates (e.g. due to different bandwidths, number of antennas, etc.) and may be used to communicate different types of information (each over a specific link).

A communication link or "link" thus corresponds to a given channel (e.g. 20 MHz, 40 MHz, and so on) in a given frequency band (e.g. 2.4 GHz, 5 GHz, 6 GHz) between an AP affiliated with the AP MLD and a non-AP STA affiliated with the non-AP MLD.

The affiliated APs and non-AP stations operate on their respective channels in accordance with one or more of the IEEE 802.11 standards (a/b/g/n/ac/ad/af/ah/aj/ay/ax/be) or other wireless communication standards.

Thanks to the multi-link aggregation, traffic associated with a single MLD can be transmitted across multiple parallel communication links, thereby increasing network capacity and maximizing utilization of available resources.

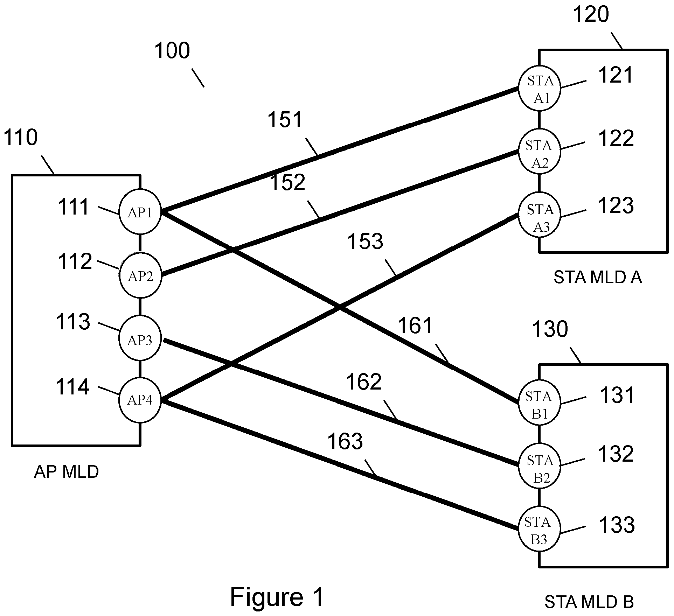

**Figure 1** illustrates a typical 802.11 network environment involving ML transmissions in which the present invention may be implemented.

Wireless communication network 100 involves an AP MLD 110 and two non-AP MLDs 120 and 130. Of course, another number of non-AP MLDs registering to the AP MLD 110 and then exchanging frames with it may be contemplated.

AP MLD 110 has multiple affiliated APs, four affiliated APs 111, 112, 113 and 114 (also referenced AP1, AP2, AP3, AP4 respectively) in the exemplary Figure, each of which behaves as an 802.11 AP over its operating channel within one frequency band. Known 802.11 frequency bands include the 2.4 GHz band, the 5 GHz band and the 6 GHz band. Of course, other frequency bands may be used in replacement or in addition to these three bands.

Non-AP MLDs 120, 130 have multiple affiliated non-AP stations, each of which behaves as an 802.11 non-AP station in a BSS (managed by an affiliated AP 111, 112, 113, 114) to which it registers. Preferably but not necessarily, non-AP MLDs have less affiliated non-AP stations than the number of APs affiliated with the AP MLD 110. In the exemplary Figure, three non-AP STAs 121, 122 and 123 (also referenced A1, A2, A3 respectively) are affiliated with non-AP MLD 120 and three non-AP STAs 131, 132 and 133 (also referenced B1, B2, B3 respectively) are also affiliated with non-AP MLD 130.

For illustrative purpose, AP 111 is set to operate on channel 10 corresponding to an operating 20 MHz channel in the 2.4 GHz frequency band, AP 112 is set to operate on channel 36-40 corresponding to an operating 40 MHz channel in the 5 GHz frequency band, AP 113 is set to operate on channel 149-153 corresponding to an operating 40 MHz channel in the 5GHz frequency band too, and AP 114 is set to operate on channel 301 corresponding to an operating 160 MHz channel in the 6GHz frequency band. In this example, the affiliate stations operate on various frequency bands.

Each affiliated AP offers a link towards the AP MLD 110 to the affiliated non-AP stations. Hence, the links for each non-AP MLD can be merely identified with the identifiers of the respective affiliated APs. In this context, each of the affiliated APs 111-114 can be uniquely identified by an identifier referred to as "link ID". The link ID of each affiliated AP is unique and does not change during the lifetime of the AP MLD. AP MLD may assign the link ID to its affiliated APs by incrementing the IDs from 0 (for the first affiliated AP). Of course, other wording such as "AP ID" could be used in a variant.

To perform multi-link communications, each non-AP MLD 120, 130 has to discover, authenticate, associate and set up multiple links with the AP MLD 110, each link being established between an affiliated AP of the AP MLD 110 and an affiliated non-AP station of the non-AP MLD. Each link enables individual channel access and frame exchanges between the non-AP MLD and the AP MLD based on the supported capabilities exchanged during association.

The discovery phase is referred below to as ML discovery procedure, and the multi-link setup phase (or association phase) is referred below to as ML setup procedure.

The ML discovery procedure allows the non-AP MLD to discover the wireless communication network 100, i.e. the various links to the AP MLD offered by the multiple affiliated APs. The ML discovery procedure thus seeks to advertise the various affiliated APs of the AP MLD, together with the respective network information.

The network information (or "profiles") of an affiliated AP may include all or part of capabilities and operational parameters.

Typically, the network information contains at least the operating class (or RF band, e.g. the 2.4GHz, 5GHz or 6GHz band), the channel number (or operating channel) and the BSSID of the affiliated AP. It may also include more complete information elements relative to its capabilities and operational parameters. The capability elements may indicate *inter alia* one or more of high-throughput (HT) capabilities, very high-throughput (VHT) capabilities, high efficiency (HE) capabilities, HE 6 GHz Band capabilities, or extremely high-throughput (EHT) capabilities. The operating elements may indicate *inter alia* one or more of HT operation parameters, VHT operation parameters, HE operation parameters, EHT operation parameters, enhanced distributed channel access (EDCA) parameters, multi-user (MU) EDCA parameters, uplink (UL) orthogonal frequency division multiple access (OFDMA) random access (UORA) parameters, target wait time (TWT) parameters, fast initial link setup (FILS) parameters, or spatial reuse (SR) parameters.

The discovery may be active (the non-AP MLD requests the AP MLD) or passive (the non-AP MLD receives beacon frames broadcast by the AP MLD).

Once a non-AP MLD has discovered the wireless communication network 100 through the ML discovery procedure and after an MLD authentication procedure, the ML setup procedure allows it to select a set of candidate setup links between its own affiliated non-AP stations and some of the discovered affiliated APs and to request the AP MLD 110 to set up these links, which may be accepted or refused by the AP MLD.

If accepted, the non-AP MLD is provided with an Association Identifier (AID) by the AP MLD, which AID is used by the affiliated non-APs of the non-AP MLD to wirelessly communicate over the multiple links (communication channels) with their corresponding affiliated APs.

For illustrative purpose, in wireless communication network 100, three candidate setup links have been requested by non-AP MLD 120 to AP MLD 110 and have been accepted by AP MLD 110: a first link 151 between affiliated AP 111 (AP1) and affiliated non-AP STA 121 (A1), a second link 152 between affiliated AP 112 (AP2) and affiliated non-AP STA 122 (A2), and a third link 153 between affiliated AP 114 (AP4) and affiliated non-AP STA 123 (A3). Similarly, three candidate setup links have been requested by non-AP MLD 130 to AP MLD 110 and have been accepted by AP MLD 130: a first link 161 between affiliated AP 111 (AP1) and affiliated non-AP STA 131 (B1), a second link 162 between affiliated AP 113 (AP3) and affiliated non-AP STA 132 (B2), and a third link 163 between affiliated AP 114 (AP4) and affiliated non-AP STA 133 (B3)

Once the links have been setup and capabilities have been exchanged, non-AP MLDs 120, 130 perform Multi-Link Operation (MLO) with their associated AP MLD 110. An example of MLO is an exchange of frames (uplink and/or downlink communication).

During MLO, some changes on the setup links may be necessary during the runtime of the network 100 due to different reasons such as interferences from another incoming BSS, congestion on one or several links, changes in data traffic loads and so on...

A ML Reconfiguration procedure as described in document 802.11-21/534r3 allows modifying the configuration of the links between a non-AP MLD and its associated AP MLD, without dissociation. This is a set of post-association procedures through which an AP MLD and an associated non-AP MLDs can make changes to their multi-link (ML) configuration, or the set of links between their affiliated STAs, while the non-AP MLD stays in the associated state throughout the procedure.

As examples, a non-AP MLD can request to add and/or delete multiple links to the AP MLD it is associated with; an AP MLD can add multiple APs to or remove multiple APs from its multi-link operation; an AP MLD can indicate deletion of one or more links to an associated non-AP MLD; an AP MLD can prompt an associated non-AP MLD to request to add and/or delete multiple links, and provide a recommended configuration.

Management frames, namely ML Reconfiguration Request and ML Reconfiguration Response frames, are used that include only the parameters related to the added, deleted and modified links. The reconfiguration request can be initiated by the non-AP MLD.

The management frames can be exchanged on an enabled link, while data are simultaneously exchanged over another link and/or a new additional link is being added between the concerned non-AP MLD and associated AP MLD.

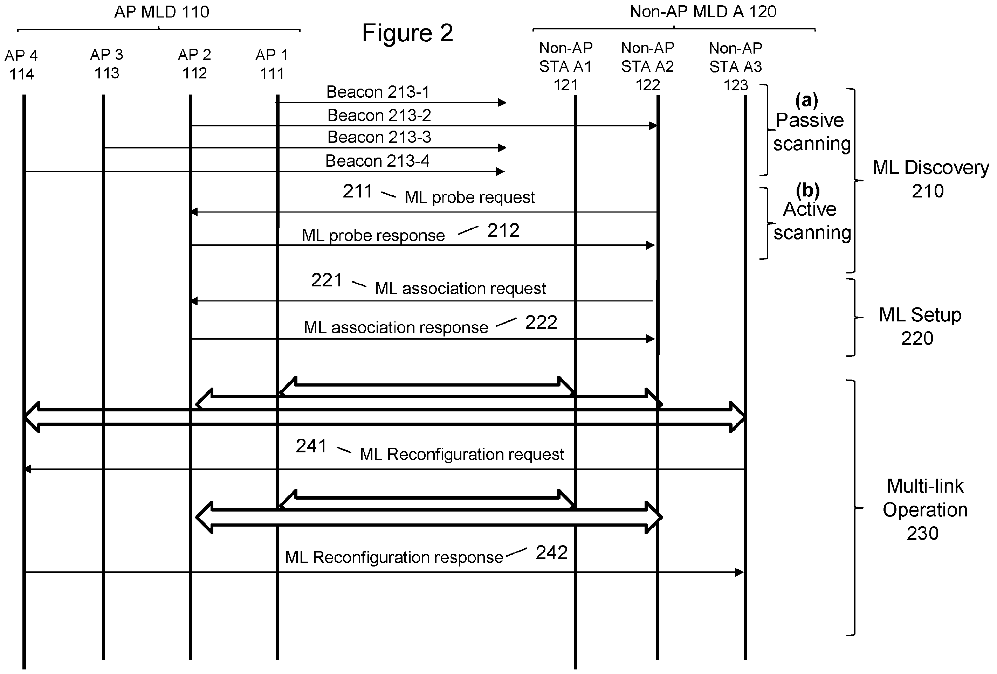

**Figure 2** schematically illustrates an exemplary sequence of management frames for operating the ML discovery and ML setup procedures when establishing a ML transmission between AP MLD 110 and non-AP MLD 120.

In order to establish a ML transmission, the non-AP MLD initiates the ML discovery procedure 210 to retrieve the available links proposed by AP MLD 110. This can be done through passive and/or active scanning operations on frequency channels in one or more of the frequency bands (typically 2.4 GHz, 5 GHz and 6 GHz bands).

The passive scanning (labelled (a) in the Figure) consists in listening ML beacon frames 213-1, 213-2, 213-3 and 213-4 sent periodically by the affiliated APs of AP MLD 110 on their operating channel. Each or part or all of the affiliated APs can periodically send ML beacon frames on its/their operating channel.

The ML beacon frames advertise the profiles of all the affiliated APs 111, 112, 113 and 114. Therefore, non-AP MLD can receive a single ML beacon frame to know all the network characteristics of all the affiliated APs, and then to be able to request links to be set up. In the example, non-AP MLD 120 receives, through its affiliated non-AP STA A2 122, ML beacon frame 213-2 from affiliated AP 112.

A ML beacon 213 sent by an affiliated AP is a beacon frame as defined in 802.11ax (for example IEEE P802.11ax/D8.0 of October 2020) augmented with a Basic variant Multi-Link element specified in IEEE P802.11be/D1.0. In particular, the Basic variant Multi-Link element carries complete or partial per-STA profile(s) for each of the APs affiliated with AP MLD 110.

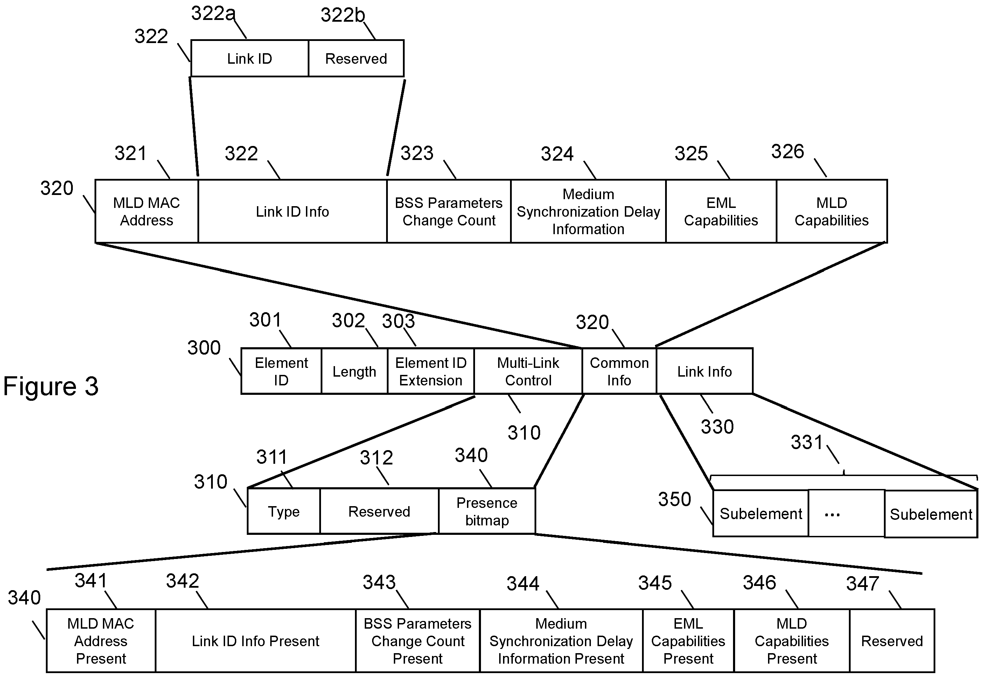

The format of the Basic variant Multi-Link element is described below with reference to **Figure 3****.**

The active scanning (labelled (b) in the Figure) consists in an exchange of management frames between the non-AP MLD and the AP MLD. In particular, the non-AP MLD may transmit (through one or more of its affiliated non-AP stations), one or more ML probe request frames 211 on the corresponding channels to be scanned by its affiliated non-AP stations 121, 122 and 123. The non-AP MLD then listens for the reception of a ML probe response frame 212 from the AP MLD (from respective affiliate APs on the operating channels). A ML probe request frame 211 can be transmitted by each affiliated non-AP station over the operating channel on which it is configured.

The ML probe request frame 211 allows the affiliated non-AP station to request an affiliated AP to include in its response, in addition to its own network information (i.e. profile), the complete or partial set of capabilities and operation elements (i.e. network information or profile) of other APs affiliated with the same AP MLD.

The affiliated stations performing the management frame exchange are referred to as "reporting" affiliated stations, while the other affiliated stations of the same MLDs are referred to as "reported" affiliated stations.

Therefore, in the example of **Figure 2****,** reporting affiliated non-AP station 122 (A2) sends the ML Probe Request frame 211 to reporting affiliated AP 112 (AP2) to obtain the network information (profile) of AP2 as well as the network information of reported affiliated APs 111, 113, 114 (AP1, AP3, AP4). Although the example shows AP2 112 and station A2 122 as reporting affiliated stations, any other pair of affiliated stations operating on the same operating channel (e.g. AP4 with A3) can be used as reporting affiliated stations.

A ML probe response frame 212 sent by a reporting affiliated AP is a probe response frame as defined in 802.11ax (for example IEEE P802.11ax/D8.0 of October 2020) augmented with a Basic variant Multi-Link element specified in IEEE P802.11be/D1.0, as illustrated in **Figure 3****.** In particular, the Basic variant Multi-Link element carries complete or partial per-STA profile(s) for each of the reported affiliated APs that are targeted in the ML probe request frame 211.

The 802.11ax fields of the ML probe response frame 212 or ML Beacon frame 213 are used in a conventional way, for instance to carry the network information (profile) of the reporting (here AP2 112) affiliated AP of AP MLD 110. Furthermore, the Address 1 field of the MAC header may be set to the broadcast address so that any non-AP MLD can retrieve the profiles of the affiliated APs from this frame (whatever a ML probe response frame or a ML beacon frame).

Basic variant Multi-Link element 300 of **Figure 3** includes Element ID field 301, Length field 302 (enabling to know the presence or not of the optional fields as well as the number of Per-STA profiles in field 330), Element ID Extension field 303, Multi-Link Control field 310, a Common Info field 320 and optional Link Info field 330.

Multi-Link Control field 310 includes a Type subfield 311, a Reserved subfield 312 and a Presence Bitmap subfield 340. Type subfield 311 is set to value 1 in order to signal the Multi-Link element 300 is a Basic variant ML element.

Presence Bitmap subfield 340 is used to indicate which subfields are included in Common Info field 320. Presence Bitmap subfield 340 thus includes a MLD MAC Address Present subfield 341, a Link ID Info Present subfield 342, a BSS Parameters Change Count Present subfield 344, a Medium Synchronization Delay Information Present subfield 344, an EML Capabilities Present subfield 345, a MLD Capabilities Present subfield 346 and a Reserved subfield 347.

MLD MAC Address Present subfield 341 is set to 1 if a MLD MAC Address field is present in the Common Info field 320; otherwise, the subfield is set to 0.

Link ID Info Present subfield 342 is set to 1 if a Link ID Info subfield is present in the Common Info field 320; otherwise, Link ID Info Present subfield is set to 0.

BSS Parameters Change Count Present subfield 343 is set to 1 if a BSS Parameters Change Count subfield is present in the Common Info field 320; otherwise, the BSS Parameters Change Count Present subfield is set to 0.

Medium Synchronization Delay Information Present subfield 344 is set to 1 if a Medium Synchronization Delay Information subfield is present in the Common Info field 320; otherwise, the Medium Synchronization Delay Information Present subfield is set to 0.

EML Capabilities Present subfield 345 is set to 1 if an EML Capabilities field is present in the Common Info field 320; otherwise, the EML Capabilities Present subfield is set to 0.

MLD Capabilities Present subfield 346 is set to 1 if a MLD Capabilities subfield is present in the Common Info field 320; otherwise, the MLD Capabilities Present subfield is set to 0.

According to the values specified in the Presence Bitmap subfield 340, the Common Info field 320 includes optionally a MLD MAC Address subfield 321, a Link ID Info subfield 322, a BSS Parameters Change Count subfield 323, a Medium Synchronization Delay Information subfield 324, an EML Capabilities subfield 325 and a MLD Capabilities subfield 326.

Those various fields are described in the D1.0 standard. For instance, Link ID Info subfield 322 includes a Link ID subfield 322a and a Reserved field 322b. Link ID Info subfield in the Common info field is not present if the Basic variant Multi-Link element is in a management frame sent by the non-AP station. Link ID subfield 322a carries the Link ID of the reporting affiliated AP when the Basic variant Multi-Link element belongs to a management frame sent by AP MLD 110.

Link Info field 330 comprises a set 331 of subelements 350. Only two subelements formats are available for the Basic variant Multi-Link element: a first format identified by a Subelement ID set to 0 corresponding to a Per-STA Profile subelement and a second one identified by a Subelement ID set to 221 corresponding to a Vendor Specific subelement. The Per-STA Profile subelement is used to carry a profile of a reported affiliated AP. It is thus used by a reporting affiliated AP to advertise the network information of its reported affiliated APs. Each Per-STA Profile subelement 350 is used to specify one specific reported affiliated AP, i.e. one specific Link ID.

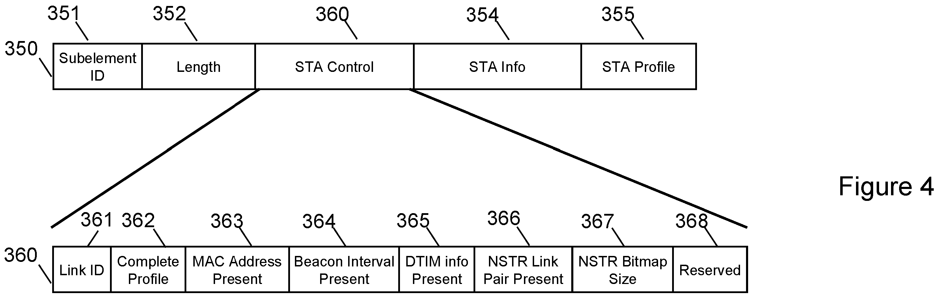

As illustrated in **Figure 4****,** a Per-STA Profile subelement 350 includes a Subelement ID subfield 351 set to 0, a Length subfield 352, a STA Control subfield 360, a STA Info subfield 354 and a STA Profile subfield 355. These fields are defined in the D1.0 standard.

STA Control subfield 360 includes a Link ID subfield 361, a Complete Profile subfield 362, a MAC Address Present subfield 363, a Beacon Interval Present subfield 364, a DTIM Info Present subfield 365, a NSTR Link Pair Present subfield 366, a NSTR Bitmap Size subfield 367 and a Reserved field 368. Link ID subfield 361 conveys the Link ID of the reported affiliated AP corresponding to the Per-STA Profile subelement 350 considered, i.e. the reported affiliated AP whose profile is described in STA Profile subfield 355 of the same Per-STA Profile subelement 350.

STA Info field 354 consists of zero or more fields whose presence is indicated by the subfields 363-367 of the STA Control field 360. The subfields in the STA Info field appear in the same order as their corresponding presence subfield in the STA Control field. For instance,

The STA Profile subfield 355 carries the requested network information, i.e. the profile of the reported affiliated AP whose Link ID is specified in Link ID subfield 361.

There are as many Per-STA Profile subelements 350 as the number of profiles of reported affiliated APs to be provided.

Back to **Figure 2****,** the ML Discovery procedure provides non-AP MLD 120 with network information on the affiliated APs of AP MLD 110. Next, non-AP MLD 120 can initiate a ML setup procedure 220 to setup the links to be involved in the ML transmission to establish, referred to as "setup links". The ML setup procedure consists in an exchange of ML Association Request and ML Association Response frames between a reporting non-AP station (A2 122 in the example) affiliated with non-AP MLD 120 and a reporting AP (AP2 112 in the example) affiliated with AP MLD 110. The reporting stations for the ML setup procedure may be the same or different stations than for the ML Discovery procedure.

To prepare the ML Association Request 221, the reporting affiliated non-AP station A2 determines which candidate setup links should be requested to AP MLD 110 (through reporting affiliated AP AP2) based on the network information obtained during the ML Discovery procedure 210.

Once the candidate setup links are known, the non-AP MLD requests AP MLD 110 to setup those links. This is done by sending, by any (reporting) affiliated non-AP station of the non-AP MLD, the ML Association Request frame 221 indicating the candidate setup links with affiliated APs of the AP MLD that are requested for ML setup.

ML Association Request frame 221 is an Association Request frame as defined in 802.11ax (for example IEEE P802.11ax/D8.0 of October 2020) augmented with a Basic variant Multi-Link element 300 as illustrated in **Figure 3** and defined in IEEE P802.11be/D1.0. In particular, Link Info field 330 indicates the candidate setup links that are requested for setup. Link Info subfield 330 is made of a set 331 of Per-STA Profile subelements 350, each Per-STA Profile element defining one of the requested candidate setup links. More precisely, the Link ID subfield 361 of the Per-STA Profile 350 is set to the Link ID of the affiliated AP corresponding to the candidate setup link concerned. Complete Profile subfield 362 is set to 1 and STA Profile subfield 355 includes all the network information elements of the affiliated non-AP station corresponding to the candidate setup link concerned. The pair {Link ID subfield 361, STA Profile subfield 355} thus indicates an affiliated AP and an affiliated non-AP station, hence defining a desired link.

Although a large number of fields has been described with reference to **Figures 3-****4,** some of the fields may be omitted and some others may be added.

Back to **Figure 2****,** a similar ML Association Request 221 may be sent by affiliated non-AP station 133 of non-AP MLD 130, which defines candidate setup links to be established between its affiliated non-AP STAs and the affiliated APs of AP MLD 110 (for example those shown in **Figure 1****).**

In the scenario of **Figure 1****,** non-AP MLD 120 requests three links (151, 152, 153) to be established and non-AP MLD 130 also requests three links (161 to 163). AP MLD 110 may accept or refuse the link proposal of non-AP MLDs 120, 130. It provides its decision by sending ML Association Response 222 responsive to the reception of ML Association Request 221. In the scenario, all requested candidate setup links are accepted and then enabled (i.e. setup).

Hence, upon receiving the ML Association Request 221, AP MLD 110 responds with a ML Association Response 222 which indicates the requested candidate setup links that are accepted for MLO transmission. The ML Association Response 212 is sent by the affiliated AP which has received the ML Association Request 221.

ML Association Response 222 is an Association Response frame as defined in 802.11ax (for example IEEE P802.11ax/D8.0 of October 2020) augmented with a Basic variant Multi-Link element similar to the one illustrated in **Figure 3** and defined in IEEE P802.11be/D1.0.

Link Info subfield 330 contains a set 331 of Per-STA Profiles 350 corresponding to the candidate links accepted for setup, each Per-STA Profile 350 thus corresponding to an accepted candidate link (i.e. to an affiliated AP). For a given accepted candidate setup link, Link ID subfield 361 is set to the Link ID of the affiliated AP of the accepted setup link, Complete Profile subfield 362 is set to 1 and STA Profile subfield 355 includes the complete network information of the affiliated non-AP station of the accepted candidate link.

The ML setup procedure between non-AP MLD 120 and AP MLD 110 thus terminates with the establishment of one or more setup links. In this situation, non-AP MLD 120 becomes in associated state with AP MLD 110 and is assigned an AID for wireless communication over the multiple enabled links. Non-AP MLD 120 then configures its affiliated non-AP stations for ML transmitting/receiving through the established setup links.

Next, the Multi-Link Operation (MLO) 230, i.e. exchange of frames, can take place over the established setup links.

During MLO 230, AP MLD 110 and/or non-AP MLD 120 may decide modifying their link configuration, for instance by adding a new link, deleting a link, modifying a link, ... To that end, the MLD requesting the reconfiguration sends a ML Reconfiguration request frame 241 to the other MLD.

In the scenario shown, non-AP MLD 120 initiates the reconfiguration through its non-AP STA A3 123. The reconfiguration may also happen while data transmission occurs on other links (here 151 and 152 not impacted by the reconfiguration for instance).

AP MLD 110 (and more generally the addressee MLD) may accept or refuse the reconfiguration proposal of non-AP MLD 120. It provides its decision by sending ML Reconfiguration Response 242 responsive to the reception of ML Reconfiguration Request 241.

As defined in document IEEE 802.11-21/534r3, the ML Reconfiguration request and response frames are defined as a Protected EHT Action frame with their Protected EHT Action field set to 7 and 8 respectively. They can be assimilated to management frames and they comprise a Reconfiguration variant Multi-Link element defined in IEEE 802.11-21/534r3.

The ML management frames sent by AP MLD during the ML Discovery usually report the profiles of all the affiliated APs. In particular, all the ML beacon frames 213 convey all the profiles of the affiliated APs. These duplications over the multiple channels of the AP MLD substantially reduce the network bandwidth available for data transmission. Hence, there is a need to improve this situation.

The present invention proposes that one of the affiliated APs of the AP MLD be selected for processing specific transmissions and in particular, relative to the management and control frames. For example, the ML beacon frames conveying the profiles of all the affiliated APs may be broadcast by this specific "management" affiliated AP, while the other affiliated APs send lighter ML beacon frames that for instance indicate where to find the full ML beacon frames.

Such specific affiliated AP may be referred to as management affiliated AP or management AP. Any link established with it may similarly be referred to as management link.

It turns out that a management frame sent by such a reporting management AP, signals that one of the affiliated APs is a management AP providing profiles of all the affiliated APs. For example, it may signal which one of the Link IDs defines such a management AP or link.

The non-AP MLD receiving such management frame may then connect the management AP if needed, with a view of obtaining, from it, the profiles of the affiliated APs.

Therefore, the management frames sent by the other, i.e. non-management, affiliated APs no longer need to provide all the profiles and may for example provide only a profile of that reporting non-management affiliated AP and a profile of the management AP for the non-AP MLD to know which affiliated AP to connect to retrieve the profiles.

In other words, an AP MLD indicates in the management frames whether the AP MLD operates with a management AP (link) or not. For example, each ML beacon frame sent by an AP affiliated with the AP MLD indicates whether the latter operates with a management AP (link) or not. In the affirmative, each ML beacon frame sent by an affiliated AP may report, using a Link ID identifier, which AP affiliated with the AP MLD corresponds to the management AP. Moreover, each ML beacon frame sent by the affiliated AP may report a minimal information sufficient for one affiliated non-AP station of a non-AP MLD to contact and transmit the management AP.

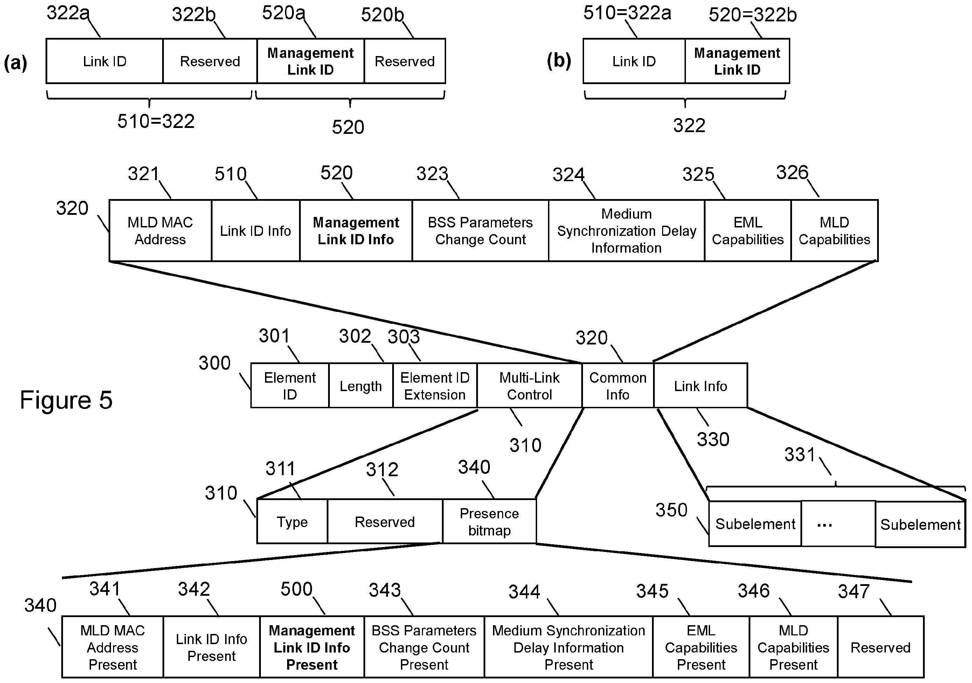

An exemplary signaling of the management AP in the management frames is now described with reference to **Figure 5****.** In this exemplary signaling, the signaling is provided in the Basic variant Multi-Link element of the management frames sent by AP MLD 110. Hence, it is applicable at least to beacon frames 213 and probe response frames 212. The fields and subfields of the Basic variant ML element 300 that are similar to those of **Figure 3** are labelled with the same numeral reference.

A first field defines whether the AP MLD implements a management AP or not. In the example of the Figure, Presence Bitmap subfield 340 of Common Info field 320 contains an additional subfield, Management Link ID Info Present subfield 500. It is preferably a one-bit value. For example, it is set to value 0 to indicate that the AP MLD does not operate with a management link, i.e. does not implement a management affiliated AP. It is set to value 1 to indicate that the AP MLD operates with a management link, hence at least one of its affiliated APs is a management AP.

If a management link is operated, a second field then stores a Link ID uniquely identifying the management AP. For example, when the Management Link ID Info Present subfield 500 is set to 1, Common Info field 320 contains a corresponding Management Link ID Info subfield 520. Management Link ID Info subfield 520 stores the Link ID of the management affiliated AP.

In some embodiments, the AP MLD implements only one management AP from amongst its affiliated APs. In that case, Management Link ID Info subfield 520 stores the Link ID of that management AP.

In other embodiments, the AP MLD may implement multiple management APs amongst its affiliated APs. For example, one management AP may be provided per frequency band. In that case, Management Link ID Info subfield 520 stores the Link ID of the management AP belonging to the same RF band as the reporting affiliated AP being about to send the management frame conveying the Basic variant Multi-Link element 300.

Management Link ID Info subfield 520 helps any non-AP MLD receiving the management frame to determine whether the reporting affiliated AP (i.e. the AP sending the management frame) is the management AP. This may be done by comparing the Link ID of Management Link ID Info subfield 520 with the Link ID of a separate field 322 **(****Figure 3****)** or 510 **(****Figure 5**) storing a Link ID uniquely identifying the reporting affiliated AP.

Two implementations of the Management Link ID Info subfield 520 and Link ID Info subfield 510 are proposed.

In a first implementation (labelled (a) on top of **Figure 5****),** Link ID Info subfield 510 is the conventional Link ID Info subfield 322 and Management Link ID Info subfield 520 is an additional (compared to the D1.0 standard) subfield made of a Management Link ID subfield 520a set to the Link ID identifier of the management AP and optionally of a Reserved subfield 520b.

In a second implementation (labelled (b) on top of **Figure 5****)** that does not modify the length of Common Info field 320 as described in the D1.0 standard, Reserved subfield 322b of the Link ID Info field 322 is used to convey the Link ID identifier of the management AP, encoded on four bits. Reserved subfield 322b is then renamed Management Link ID subfield.

As explained above with reference to **Figure 3****,** Link Info field 330 includes a set 331 of Per-STA Profile subelements 350 conveying the profiles of all the reported affiliated APs (possibly as requested in the Probe Request frame 211). The conventional 802.11ax fields of the management frame also include the profile of the reporting affiliated AP.

Where the reporting affiliated AP is the management AP, the management frame it sends (hence the Basic variant Multi-Link element 300) advertises the profiles of all the other affiliated APs as conventionally done (in addition to its own profile in the conventional 802.11ax fields outside the ML element 300).

Where the reporting affiliated AP is not a management AP (it is a "non-management" AP), the management frame it sends (hence the Basic variant Multi-Link element 300) advertises, in addition to its own profile (in conventional 802.11ax fields), only management AP profiles, i.e. the profile or profiles of the one or more management APs.

In some embodiments, the AP MLD implements only one management AP from amongst its affiliated APs. In that case, Link Info field 330 includes a single Per-STA Profile subelement 350 dedicated to that single management AP.

In other embodiments, the AP MLD implements multiple management APs amongst its affiliated APs. In that case, Link Info field 330 includes plural Per-STA Profile subelements 350, one dedicated to each management AP. Preferably the management AP belonging to the same RF band as the reporting affiliated AP being about to send the management frame is declared first in the set 331.

The Per-STA Profile subelements 350 are filled in a conventional manner given the affiliated APs to be profiled.

In this example, the management AP profile or profiles are conveyed in Per-STA fields 350 included in Link Info field 330 of Basic variant Multi-Link element 300 of the management frame.

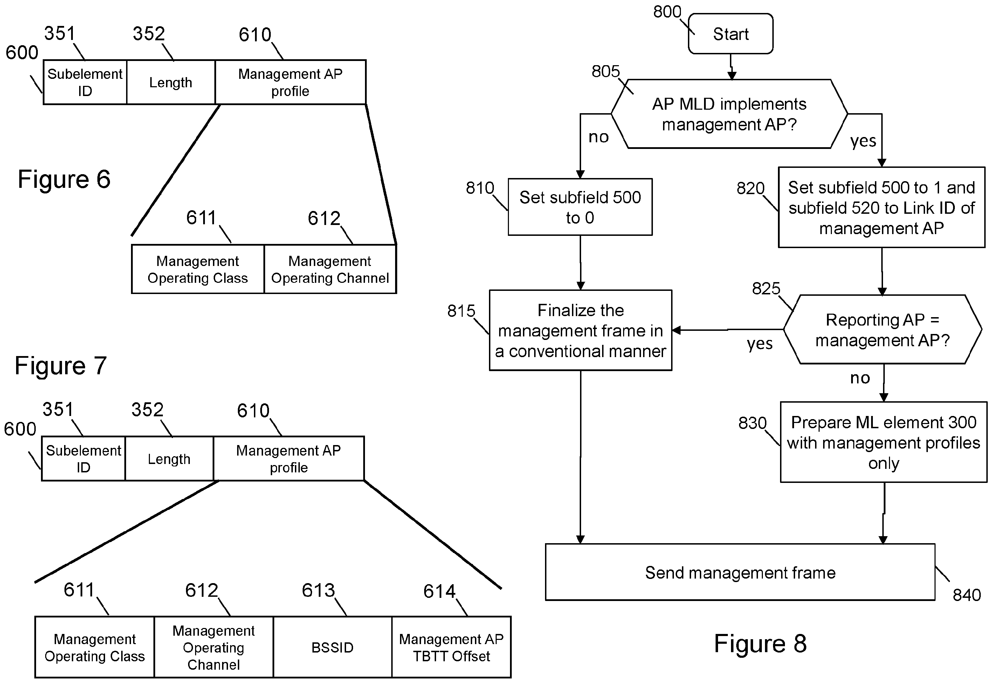

In a variant as illustrated in **Figure 6****,** the management AP profile or profiles are conveyed in a newly defined subelement 600, namely Per-Management-STA field, included in Link Info field 330 of Basic variant Multi-Link element 300 of the management frame. Per-Management-STA Profile subelement 600 has a Subelement ID subfield 351 set to a value different from 0 and 221, for example 1, hence defining a Per-Management-STA Profile subelement, i.e. a new type of subelement compared to the D1.0 standard.

This variant advantageously allows providing a lighter profile of the management AP or APs, possibly reduced to the minimal information needed by a non-AP MLD to connect to the management AP.

Preferably, only the management frames sent by non-management APs include such Per-Management-STA Profile subelement 600.

Optionally, Per-Management-STA Profile subelement 600 may further include the Link ID of the management AP concerned. In that case, Management Link ID Info Present subfield 500 and corresponding Management Link ID Info subfield 520 can be omitted. Indeed, by detecting the presence of such Per-Management-STA Profile subelement 600 (Subelement ID subfield 351 set to 1), a non-AP MLD knowns that the reporting affiliated AP is not a management AP and a management AP is defined in the Per-Management-STA Profile subelement or subelements.

In the example of **Figure 6****,** Per-Management-STA Profile subelement 600 includes a Subelement ID subfield 351 set to 1, a Length subfield 352 and a Management AP profile subfield 610. Optionally, Per-Management-STA Profile subelement 600 may further include the Link ID of the management AP concerned.

Management AP profile subfield 610 contains at least the minimal information sufficient for initiating a transmission by one of the affiliated non-AP stations of the AP MLD with the management AP.

For example, it includes a first subfield, Management Operating Class subfield 611 in the Figure, defining an operating class (i.e. frequency band, e.g. from amongst 2.4 GHz, 5 GHz, 6 GHz) of the management AP considered and a second subfield, Management Operating Channel subfield 612 in the Figure, defining an operating channel (within the frequency band) of the affiliated AP.

In embodiments, only these two subfields (and optionally the Link ID subfield) are provided. In other embodiments, the BSSID of the management AP may also be provided in a third and last field. In yet other embodiments, additional fields describing the management AP may be provided.

For example, in embodiments as illustrated in **Figure 7****,** Management AP profile subfield 610 further includes an optional third subfield, BSSID 613, defining the BSSID of the management AP and a fourth subfield, Management AP TBTT (Target Beacon Transmission Time) Offset subfield 614, indicating a scheduled time when the management AP considered will send a next (ML) beacon frame providing the profiles of all the affiliated APs.

Such Management AP TBTT Offset subfield 614 allows a non-AP MLD receiving the management frame to know when it can expect receiving a full ML beacon frame (with all the profiles of the affiliated APs) from the management AP or from the multiple management APs (if implemented). In that case, the non-AP MLD may decide, based on the Management AP TBTT Offset subfield, between waiting for the next beacon frame from the management AP or sending a probe request frame to the management AP, to obtain the profiles of the affiliated APs from the management AP. It may also decide which management AP (if there are plural of them declared through multiple Per-Management-STA Profile subelements 600) to listen to in order to receive for example a full ML beacon frame as soon as possible.

Management AP TBTT Offset subfield 614 can be defined in the same way as the Neighbor AP TBTT Offset subfield in the D1.0 standard.

**Figure 8** illustrates, using a flowchart, general steps at a reporting AP affiliated with AP MLD 110. The same steps may be performed by each and every affiliated AP of AP MLD 110.

The process starts (step 800) when a ML management frame conventionally dedicated to provide the profiles of the affiliated APs is to be generated. This includes ML beacon frames 213 and ML Probe Response frames 212. In some embodiments, only the ML beacon frames sent by the affiliated APs may be handled in this way (the ML Probe Response frames remaining conventional ones).

When the management frame has to be prepared, the AP MLD checks at step 805 whether it implements a management AP (or management link). This may include plural management APs, for example one per RF band.

In the negative of test 805, the AP MLD sets Management Link ID Info Present subfield 500 of Multi-Link Control field 310 of the Basic variant ML element 300 to 0 at step 810. Hence, Common Info field 320 and Link Info field 330 are conventionally prepared at step 915. The management frame is then ready to be sent.

In the affirmative of test 805, the AP MLD sets Management Link ID Info Present subfield 500 of Multi-Link Control field 310 of the Basic variant ML element 300 to 1, and sets the corresponding Management Link ID Info Present subfield 520 in Common Info field 320 to the Link ID identifier of the management AP at step 820. If plural management APs are provided at AP MLD 110, the Link ID of the management AP operating on the same RF band as the reporting affiliated AP (it may be the same AP) is preferably indicated in subfield 520.

The management AP is therefore signaled in the management frame.

Next to step 820, test 825 checks whether the reporting affiliated AP (that builds the management frame and thus performs the steps of the Figure) is a management AP.

In the affirmative, it is desired to send a full ML management frame as conventional as possible. Therefore, the process goes to step 815 where the other fields of the management frame, in particular Link Info field 330, are conventionally prepared. In particular, Link Info field 330 comprises a set 331 of Per-STA Profile subelements describing all the reported affiliated APs (or those requested by a non-AP MLD in case of a ML Probe Response frame 212). It means that a ML beacon frame prepared by a management affiliated AP advertises the profiles of all the affiliated APs.

In the negative of test 825, it is desired to send a light ML management frame where only the management profile of one or more management APs is signaled in addition to the profile of the reporting non-management AP (included in the conventional 802.11ax fields of the frame outside the ML element 300). Therefore, the process goes to step 830 where the Link Info field 330 is prepared with a set 331 including the management profile or profiles only.

As described above, the set 331 may be made of one or more Per-STA Profile subelements 350. In a variant, it may be made of one or more Per-Management-STA Profile subelements 600.

If plural management APs are implemented at AP MLD 110, the first Per-STA Profile subelements 350 or Per-Management-STA Profile subelements 600 in the set 331 may be the one indicated in Management Link ID subfield 520 (through its Link ID). Preferably, it corresponds to a management AP belonging to the same RF band as the reporting AP.

Once the management frame is ready after step 815 or step 830, it is sent by the reporting AP over its operating band and channel, at step 940.

The other management frames (i.e. not processed according to **Figure 8****)** are handled in a conventional way.

In a slight variant of **Figure 8****,** steps 810 and 820 can be omitted when Per-Management-STA Profile subelements 600 (including a Link ID identifier of the concerned management AP) are used for the management frames sent by non-management affiliated APs. Indeed, as explained above, the specific format of the subelements composing Link Info field 330 makes it possible to know, from the management frame, whether the reporting affiliated AP is a management AP. Per-Management-STA Profile subelement or subelements 600 contain the profile or profiles of the management AP or APs.

In this variant, step 815 builds conventional Per-STA Profile subelements 350 while step 930 builds one or more Per-Management-STA Profile subelements 600.

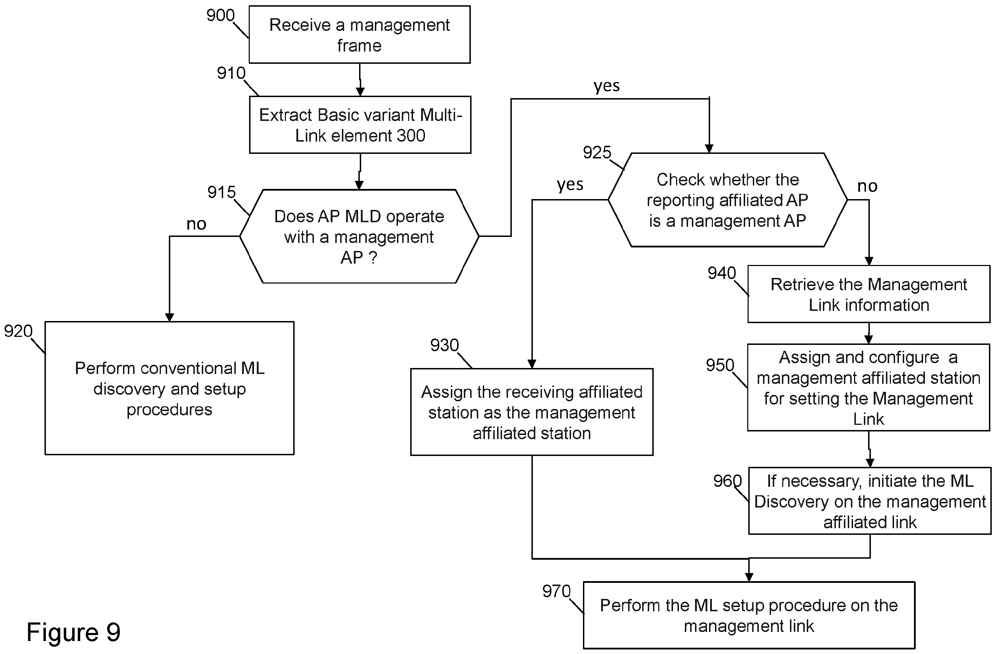

**Figure 9** illustrates, using a flowchart, general steps at a reporting non-AP station affiliated with a non-AP MLD. The same steps may be performed by each and every affiliated non-AP station of the non-AP MLD.

The process starts at step 900 by the reception of a management frame sent by a reporting affiliated AP of the AP MLD. As mentioned above this may be a ML beacon frame 213 during a passive scanning or a ML Probe Response frame 212 during an active scanning.

At step 910, the non-AP MLD extracts from the received management frame the Basic variant Multi-Link element 300.

Next, at step 915, the non-AP MLD checks whether the AP MLD operates with a management AP. This is done for instance by checking that Management Link ID Info Present subfield 500 is set to 1.

In a variant introduced above, this check may consist in verifying whether Link Info field 330 includes Per-Management-STA Profile subelement or subelements 600 only (the AP MLD hence operates with a management AP) or includes Per-STA Profile subelement or subelements 350 only (the AP MLD hence does not operate with a management AP).

If it does not, next step is 920 where conventional ML discovery and setup procedures are performed with the reporting affiliated AP (from which the management frame is received).

If it does operate with a management AP, next step is 925 where the non-AP MLD checks whether the reporting affiliated AP is the management AP (or a management AP in case of plural management APs).

This may be done by retrieving the Link ID as specified in Management Link ID Info subfield 520 and comparing it with the Link ID of the reporting affiliated AP as specified in Link ID field 322a. If the values of the two Link IDs are equal, the reporting affiliated AP is the management AP.

In the variant introduced above, this check may consist in verifying whether the Link ID of the reporting affiliated AP as specified in Link ID field 322a corresponds to the Link ID of the first (or of any) Per-Management-STA Profile subelement 600 in Link Info field 330.

In the affirmative (the reporting affiliated AP is a management AP), the reporting affiliated non-AP station having received the management frame is declared as management non-AP station at step 930, hence defining a management link with the management AP. The ML setup procedure can then be performed on that management link at step 970. Indeed, as the ML management frame has been received through this management link, it includes all the information necessary for discovering all the APs affiliated with the AP MLD and the ML setup procedure may be initiated.

In the negative of check 925, the non-AP MLD does not currently exchange with a management AP of the AP MLD. Hence, at step 940, the non-AP MLD retrieves the network information of the management AP contained in Link Info field 330 of the received ML management frame. This information is stored in the profile of the management AP within either the Per-STA Profile subelement 350 or the Per-Management-STA Profile subelement 600 of Link Info field 330.

In either embodiment, the non-AP MLD retrieves the operating class 611 and the operating channel 612 of the management AP.

Next, at step 950, the non-AP MLD assigns one of its affiliated non-AP stations as its management affiliated non-AP station. To do so, it configures it with the retrieved operating class (frequency band) and channel, hence defining a management link with the management AP.

Next, at step 960, a ML Discovery procedure is launched by the management affiliated non-AP station over the management link. This means that, to perform the Association procedure, the non-AP MLD switches from one reporting affiliated non-AP station to another affiliated non-AP station to exchange management frames with the management AP.

For instance, it sends a ML Probe Request frame 211 as explained above. Indeed, the management frame at step 900 did not include the profiles of all the APs affiliated with the AP MLD.

In a variant, the management affiliated non-AP station may merely wait for the next ML beacon frame 213 sent by the management AP.

The non-AP MLD may decide between the two variants depending for instance on the Management AP TBTT Offset subfield 614 indicated in the management frame received at step 900.

Once the profiles of the affiliated APs are known, next step is step 970 to perform the ML setup procedure on the management link, between the management AP and the management affiliated non-AP station.

With this approach of the present invention, when an AP MLD operates with a management link, the AP MLD concentrates the traffic relative to management or control through the management link instead of the others links in order to release bandwidth on these latter.

As shown in the example above, the non-AP MLD shall be connected to the AP MLD with the management link. It means that one of the affiliated non-AP stations of the non-AP MLD shall be assigned to the management AP. If it is not possible, it may be decided that the non-AP MLD cannot be associated with the AP MLD, the non-AP MLD being refused during the ML association procedure.

In some embodiments, each non-AP MLD shall select in priority the management link to be connected with the AP MLD. More precisely, if the non-AP MLD may select the management link and assign it one of its affiliated non-AP station, the non-AP shall select the management link as a candidate setup link during the ML setup procedure. If it is not possible, the AP MLD selects other candidate setup links.

Furthermore, the MLD AP cannot refuse the management link during the ML setup procedure.

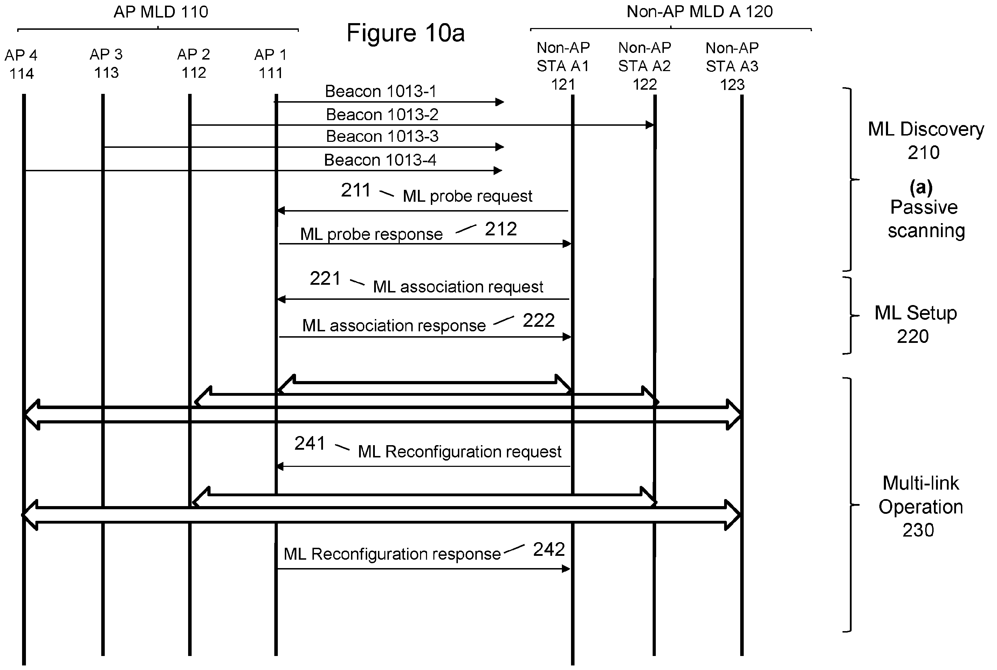

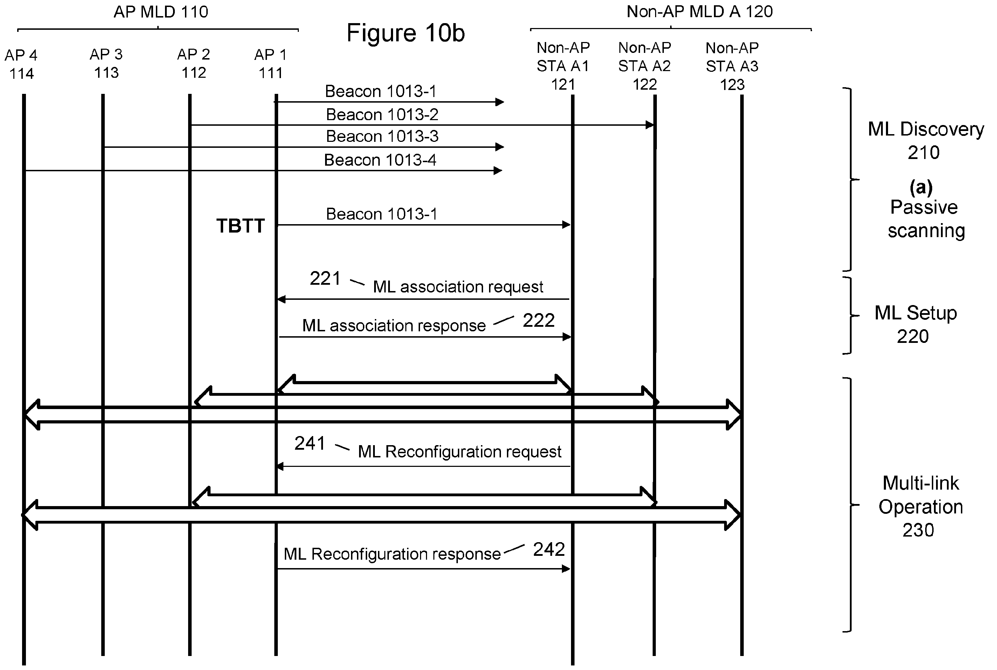

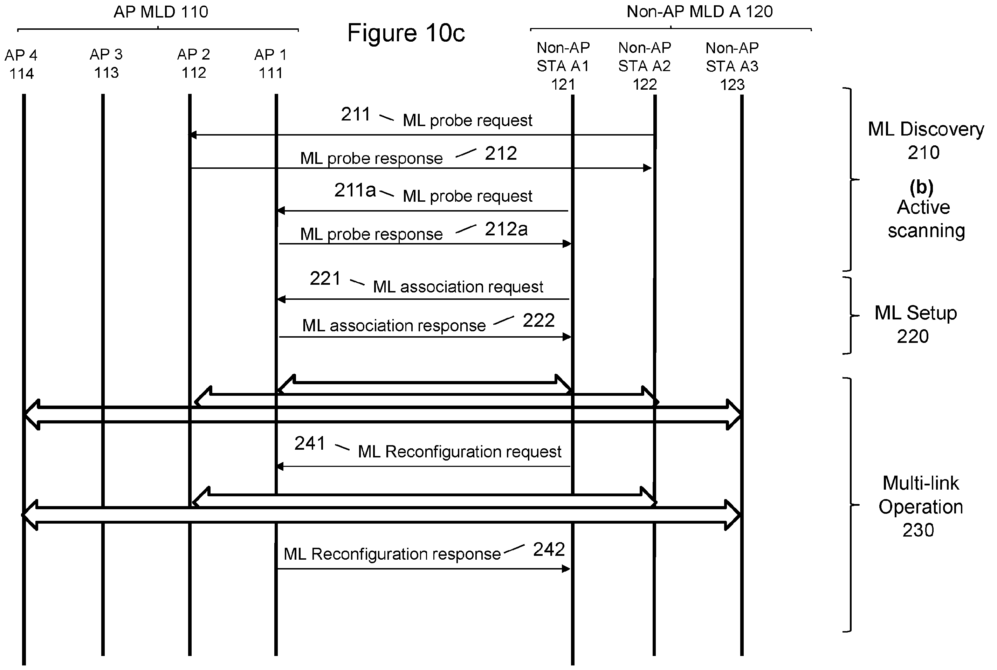

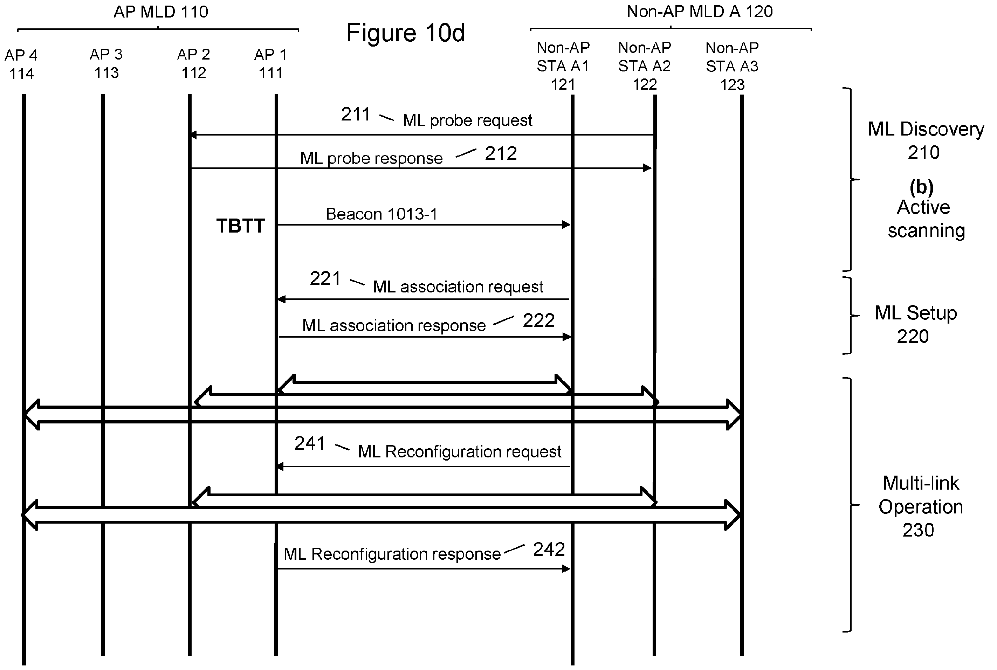

**Figures 10a****,** **10b****,** **10c** and **10d** illustrate some variants of the scenario of Figure 2, implementing the present invention. In these scenarios, AP1 is considered to be the management AP affiliated with AP MLD 110.

**Figures 10a** and **10b** concerns the passive scanning during the ML Discovery procedure.

In both scenarios, each affiliated AP (AP1, AP2, AP3, AP4) of AP MLD 110 sends respectively ML beacon frames 1013-1, 1013-2, 1013-3 and 1013-4.

ML beacon frames 1013-2, 1013-3 and 1013-4 are sent by non-management affiliated APs. They are light ML beacon frames because they include only the network information (profile) of the management AP (AP1) in addition to the profile of the reporting AP. On the other hand, ML beacon frame 1013-1 is sent by management AP AP1. Thus it is a full ML beacon frame because it contains the network information (profile) of all affiliated APs (AP1, AP2, AP3, AP4) of AP MLD 110.

In the scenarios, affiliated non-AP station A2 of non-AP MLD A receives light ML beacon frame 1013-2 from AP2. Non-AP MLD A extracts its Basic variant Multi-Link element 300 and identifies that reporting AP AP2 is not the management affiliated AP of AP MLD 110 but AP1 is the management AP. Non-AP MLD A also retrieves the operating band and channel of AP1 and configures its affiliated non-AP station A1 for operating with AP1 by setting its operating frequency and channel. Station A1 is now the management affiliated non-AP station of non-AP MLD A.

In the scenario of **Figure 10a****,** A1 then sends a ML Probe Request frame 211 to initiate the discovery procedure with AP1. In response, it receives a ML Probe Response frame 212 providing the profiles of all the affiliated APs, because it is sent over the management link. Next, the ML setup procedure 220 is performed with AP1 and station A1 over the management link. The MLO 230 can take place thereafter.

In the scenario of **Figure 10b****,** rather than sending ML Probe Request frame 211, A1 waits for the next full ML beacon frame 1013-1 send by AP1 over the management link. A1 may be aware of the scheduled time of this next full ML beacon frame thanks to the Management AP TBTT Offset subfield 614 described above. In that way, A1 retrieves the profiles of all the affiliated APs. Next, the ML setup procedure 220 is performed with AP1 and station A1 over the management link. The MLO 230 can take place thereafter.

**Figures 10c** and **10d** concerns the active scanning during the ML Discovery procedure.

In both scenarios, the affiliated non-AP stations A1-A3 of non-AP MLD A send a ML Probe Request frame 211 over its channel to initiate the discovery procedure with AP MLD 110. Only the Probe Request frame 211 sent by A2 is shown to simplify the Figure.

In response, non-AP MLD receives a ML Probe Response frame 212 on one of the channels. If it is received from the management AP AP1, normal process can be performed because it would contain the network information (profile) of all affiliated APs (AP1, AP2, AP3, AP4) of AP MLD 110.

As shown in the Figures, if it is received from a non-management AP, here AP2, ML Probe Response frame 212 is "light" in that it includes only the network information (profile) of the management AP (AP1) in addition to the profile of the reporting AP AP2.

Non-AP MLD A extracts Basic variant Multi-Link element 300 from the received frame 212 and identifies that reporting AP AP2 is not the management affiliated AP of AP MLD 110 but AP1 is the management AP. Non-AP MLD A also retrieves the operating band and channel of AP1 and configures its affiliated non-AP station A1 for operating with AP1 by setting its operating frequency and channel. Station A1 is now the management affiliated non-AP station of non-AP MLD A.

As for **Figure 10a****,** in the scenario of **Figure 10c****,** A1 then sends a ML Probe Request frame 211a to initiate the discovery procedure with AP1. In response, it receives a ML Probe Response frame 212a providing the profiles of all the affiliated APs, because it is send over the management link. Next, the ML setup procedure 220 is performed with AP1 and station A1 over the management link. The MLO 230 can take place thereafter.

As for **Figure 10b****,** in the scenario of **Figure 10d****,** rather than sending ML Probe Request frame 211a, A1 waits for the next full ML beacon frame 1013-1 send by AP1 over the management link. A1 may be aware of the scheduled time of this next full ML beacon frame thanks to the Management AP TBTT Offset subfield 614 described above. In that way, A1 retrieves the profiles of all the affiliated APs. Next, the ML setup procedure 220 is performed with AP1 and station A1 over the management link. The MLO 230 can take place thereafter.

Once the association procedure is complete, the management AP and management affiliated non-AP station are used in priority to exchange (over the management link) the management frames and control frames relative to MLO configuration, i.e. management frames and/or control frames that include at least one parameter affecting a link of the multi-link operation. For example, the management frames 241, 242 used to conduct a Multi-link reconfiguration are preferably transmitted over the management link rather than any of the other links of MLO 230. Other exemplary frames to be transmitted over the management link include action frames specific to the MLO such as TID-To-Link Mapping Request/Response or TID-To-Link Mapping Teardown, as defined in the D1.0 standard.

As apparent from the above, in an exemplary operation mode, the ML beacon frames sent over the management Link (by the management AP) contain systematically the complete information of the AP MLD (relative to all its affiliated APs). In particular, the ML beacon frames contain a Basic variant Multi-Link element having a conventional Link Info field 330 with the profiles of all the reported affiliated APs.

On the other hand, in the exemplary operation mode, the ML beacon frames sent through the links other than the management link contain systematically the minimal information of the management AP only from amongst the reported affiliated APs. In particular, the ML beacon frames contain a Basic variant Multi-Link element having a Link Info field 330 reduced to only this minimal information for the management AP or APs.

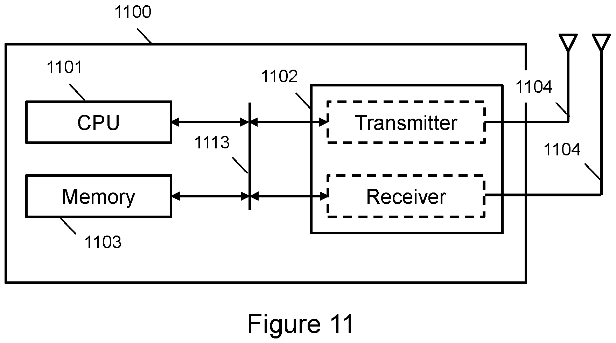

**Figure 11** schematically illustrates a communication device 1100, any one of the MLDs discussed above, of a radio network, configured to implement at least one embodiment of the present invention. The communication device 1100 may preferably be a device such as a micro-computer, a workstation or a light portable device. The communication device 1100 comprises a communication bus 1113 to which there are preferably connected:
a central processing unit 1101, such as a processor, denoted CPU;
a memory 1103 for storing an executable code of methods or steps of the methods according to embodiments of the invention as well as the registers adapted to record variables and parameters necessary for implementing the methods; and
at least one communication interface 1102 connected to a wireless communication network, for example a communication network according to one of the IEEE 802.11 family of standards, via transmitting and receiving antennas 1104.

Preferably the communication bus provides communication and interoperability between the various elements included in the communication device 1100 or connected to it. The representation of the bus is not limiting and in particular the central processing unit is operable to communicate instructions to any element of the communication device 1100 directly or by means of another element of the communication device 1100.

The executable code may be stored in a memory that may either be read only, a hard disk or on a removable digital medium such as for example a disk. According to an optional variant, the executable code of the programs can be received by means of the communication network, via the interface 1102, in order to be stored in the memory of the communication device 1100 before being executed.

In an embodiment, the device is a programmable apparatus which uses software to implement embodiments of the invention. However, alternatively, embodiments of the present invention may be implemented, totally or in partially, in hardware (for example, in the form of an Application Specific Integrated Circuit or ASIC).

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon referring to the foregoing illustrative embodiments, which are given by way of example only and which are not intended to limit the scope of the invention, that being determined solely by the appended claims. In particular, the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A communication method in a wireless network, comprising at an access point, AP, multi-link device, MLD, having multiple affiliated APs:
sending a management frame.

2. A communication method in a wireless network, comprising at a non-access point, non-AP, multi-link device, MLD:
receiving a management frame.

3. The method of Claim 1 or 2, wherein the management frame signals one of the affiliated APs is a management AP providing profiles of all the affiliated APs.

4. The method of Claim 1 or 2, wherein the management AP is signaled using a Link ID identifier.

5. The method of Claim 4, wherein the Link ID identifier is a four-bit identifier.

6. The method of Claim 1 or 2, wherein the management frame is a beacon frame.

7. The method of Claim 1 or 2, wherein the management frame is transmitted by the management AP, and the management frame advertises the profiles of all the other affiliated APs.

8. The method of Claim 1 or 2, wherein the management frame is transmitted by one of the affiliated AP that is not the management AP, and the management frame provides a profile of the transmitting affiliated AP and a management AP profile of the management AP.

9. The method of Claim 2, wherein responsive to the management frame, the non-AP MLD retrieves profiles of all the affiliated APs from the management AP.

10. The method of Claim 9, wherein retrieving the profiles includes sending a probe request frame to the management AP.

11. The method of Claim 2, further comprising, at the non-AP MLD, determining from the management frame whether an affiliated AP transmitting the management frame is the management AP.

12. The method of Claim 11, wherein responsive to determining that the transmitting affiliated AP is not the management AP, the non-AP MLD configures an affiliated non-AP station of the non-AP MLD to communicate with the management AP.

13. The method of Claim 11, wherein responsive to determining that the transmitting affiliated AP is not the management AP, switching from one affiliated non-AP station to another affiliated non-AP station to exchange management frames with the management AP.

14. The method of Claim 1 or 2, wherein the management frame includes predetermined information enabling a specific link to be identifiable.

15. A wireless communication device comprising at least one microprocessor configured for carrying out the steps of the method of Claim 1 or 2.

16. A non-transitory computer-readable medium storing a program which, when executed by a microprocessor or computer system in a wireless device, causes the wireless device to perform the method of Claim 1 or 2.
